# EUROPEAN PATENT APPLICATION

(11) **EP 4 807 371 A1**
(43) Date of publication of application: **16.09.2026**
(21) Application number: 25163896.1
(22) Date of filing: 14.03.2025
(51) Int. Cl.: G01N 35/00, B65G 21/20, G01N 35/10, G02B 21/24, G01N 35/04

(54) **PIPETTE TIP POSITIONING WITH GUIDING ELBOW**

(71) Applicant: Tecan Trading AG, 8708 Männedorf (CH)
(72) Inventor: BOLLI, Beat, 8708 Männedorf (CH); GARDIN, Samuele, 8314 Kyburg (CH); KELLER, Daniel, 8640 Rapperswil (CH); VILAJ, Volfgang, 8707 Uetikon am See (CH)
(74) Representative: Sykora & König Patentanwälte PartG mbB

(57) **Abstract**

A guiding elbow (28) for a laboratory automation device (10) comprises a first wing (52a) and a second wing (52b), which are angled with respect to each other; a first notch (54a), which is running along a lower inner side of the first wing (52a), and a second notch (54b) running along a lower inner side of the second wing (52b), for placing the guiding elbow (28) on a corner (46) of a component (24) of the laboratory automation device (10); a position detection area (56) arranged on an upper face (60) of the guiding elbow (28), wherein the position detection area (56) has two recesses (58), each recess (58) having two edges (86) with varying distance; and at least one alignment member (68) for generating a force in a direction towards the first notch (54a) and the second notch (54b).

## Description

### FIELD OF THE INVENTION

The invention relates to a guiding angle and a guiding system for a laboratory automation device as well as to the laboratory automation device. The invention further relates to a method, a computer program and a computer-readable medium for pipetting liquid with the laboratory automation device.

### BACKGROUND OF THE INVENTION

Laboratory automation devices are used for automating laboratory processes, such as pipetting liquids between samples, liquid containers and wells as well as analyzing liquids. Usually, a laboratory automation device comprises a workbench, onto which carriers for carrying labware for the samples, liquid containers and microplates with wells are placed and a pipetting arm for carrying and automatically moving a pipette, which is used to perform the pipetting processes.

Laboratory automation devices may comprise removable components, which may be placed in receptacles of the workbench. Such a removable component may be slightly misaligned due to tolerances, and it may become difficult to align the tip orifice of the pipette with a port of the component. Furthermore, due to a coaxial error of the pipette, the position of the tip orifice may vary. These uncertainties may result in the tip orifice failing to access the port of the component.

### DESCRIPTION OF THE INVENTION

It is an object of the invention to improve the alignment of a pipette tip with a port of a removable component of a laboratory automation device. A further object is to reduce errors in pipetting liquid into a port of a removable component of a laboratory automation device.

These objectives are achieved by the subject-matter of the independent claims. Further exemplary embodiments are evident from the dependent claims and the following description.

A first aspect of the invention relates to a guiding elbow for a laboratory automation device. A laboratory automation device is a device designed for automating assay procedures. In particular, a laboratory automation device comprises a pipette automatically movable by a pipetting arm of the laboratory automation device, which is adapted for aspirating and dispensing liquid with the pipette. The laboratory automation device comprises a controller for controlling the pipetting arm and other actuators.

The guiding elbow is a part of a guiding system further comprising a placement frame and a component of the laboratory automation device. The placement frame is rigidly connected with the component, such as a microfluidic device. In general, the component may be a removable component of the laboratory automation device. The guiding elbow, which has a positioning area for finding a reference point with a sensor of the laboratory automation device, is designed to be put onto the top of the component. Furthermore, the placement frame and the guiding elbow may be attached to each other with magnets and are designed to move into a relative position with the magnets, such that the reference point and a port of the component have a defined distance. In such a way, the position of the port may be found with high accuracy.

According to an embodiment, the guiding elbow comprises a first wing and a second wing, which are angled with respect to each other. The angle may be equal to an angle of two corners of the component, onto which the guiding elbow is placed. The angle between the wings may be 90° or may be larger, such as 120°. In the area between the wings, the port of the component may be arranged.

According to an embodiment, the guiding elbow comprises a first notch, which is running along a lower inner side of the first wing, and a second notch running along a lower inner side of the second wing, for placing the guiding elbow on a corner of the component of the laboratory automation device. The notches may have a complementary shape with respect to the corner of the component.

According to an embodiment, the guiding elbow further comprises a position detection area arranged on an upper face of the guiding elbow, for example on one of the first wing and the second wing, wherein the position detection area has two recesses, each recess having two edges with varying distance. When viewed from a view direction onto the top side of the guiding elbow, the two edges have varying distance, which may mean that the one edge is not in parallel to the other edge. Varying distance also may mean that the edges of one recess are not translational symmetric, i.e. one edge cannot be brought into cover with the other edge be a mere translation without rotation.

When the edges of one recess are straight, they are inclined and/or not in parallel. The recesses may be arranged besides each other and/or may have the same shape and/or may be symmetric. The position detection area is for detecting a reference position, for example based on capacity measurements. The reference position may be a reference position of the guiding elbow, which is aligned with respect to the component and its port. The reference position is therefore also a reference position for the port.

According to an embodiment, the guiding elbow further comprises at least one alignment member for generating a force in a direction towards the first notch and the second notch. With the one or more alignment members, the guiding elbow is moved towards the component, such that it fits tight on the corner of the component. The position detection area and/or the reference position of the guiding elbow have therefore a defined distance to the port of the component.

According to an embodiment, the guiding elbow further comprises at least one alignment member is adapted and/or designed for pressing the first notch and the second notch against the corner of the component. The at least one alignment member may be adapted for generating forces, such as elastic members, for example, springs, cushions, rubber elements, etc., and magnetic members, for example permanent magnets, magnetic materials, etc.

According to an embodiment, the guiding elbow further comprises at least a first magnetic spot arranged in a lower face of the first wing and at least a second magnetic spot arranged in a lower face of the second wing, wherein each of the first magnetic spot and second magnetic spot are made of a permanent magnet and/or from magnetic material. The magnetic spots may align with magnetic spots in a top of the placement frame, when the guiding elbow is placed on top of the placement frame and the component. The magnetic spots of the guiding elbow may be offset to the magnetic spots in the top of the placement frame. The magnetic spots of the placement frame may be made of permanent magnets and/or magnetic material. It may be that the guiding elbow has a planar contact face, which contacts a planar placement face of the placement frame.

The first magnetic spot in the first wing may have an offset to a third magnetic spot in the placement frame. The second magnetic spot in the first wing may have an offset to a fourth magnetic spot in the placement frame. The offsets are such that the magnetic spots move the guiding elbow towards the corner of the component. In such a way, tolerances between the guiding elbow and the component may be compensated and/or the notches of the guiding elbow are placed on the corner of the component without tolerances.

A lower face of the guiding elbow may be planar and/or in parallel to the optionally planar upper surface. The lower face of the guiding elbow may be divided into the lower face of the first wing and the lower face of the second wing.

A magnetic spot may be a region and/or a volume made filled out with a permanent magnet or a magnetic material, in particular a ferromagnetic material. A magnetic spot may be a bore in the guiding elbow and/or the placement frame filled with a permanent magnet or a magnetic material.

With the guiding elbow and in particular the guiding system, exact positioning of the pipetting tip with respect to the component is possible. In particular, small inlet ports and/or outlet ports of the component are accessible, which would be otherwise not accessible because of mechanical tolerances of the pipetting arm and of tolerances in axiality of the pipette.

According to an embodiment, the at least one alignment member comprises a first elastic member arranged opposite to the first notch and a second elastic member arranged opposite to the second notch. The first elastic member and the second elastic member may be made of elastic plastics material, such as rubber.

The first elastic member may be arranged between a first pushing face of the guiding elbow and a first pushing face of the placement frame. The first pushing face of the guiding elbow and the first pushing face of the placement frame are in parallel with each other. The second elastic member may be arranged between a second pushing face of the guiding elbow and a second pushing face of the placement frame. The second pushing face of the guiding elbow and the second pushing face of the placement frame are in parallel with each other.

According to an embodiment, each of the first notch and the second notch have a guiding face in parallel to the lower face and a stop face angled with respect to the guiding face. The guiding face is designed to be put on top of the component. The stop face is designed to touch a side of the component.

According to an embodiment, at least a part of the stop face is slanted. A first part of the stop face may be orthogonal to the guiding face and/or the lower face. A second part may be slanted, i.e., may have an angle smaller than 90° with respect to the guiding face and/or the lower face. The second part may be a lower part and/or may be used for inserting the guiding elbow between the placement frame and the component. The first part may be an upper part and/or may be designed to touch a side of the component.

According to an embodiment, the stop face and in particular the slanted second part protrudes beyond the lower face. This may help to position the guiding elbow on the placement frame.

According to an embodiment, a corner hole is arranged in an inner corner of the guiding elbow, the corner hole running from an upper face to a lower face of the guiding elbow. The first notch and the second notch may lead into the corner hole. The corner hole is designed to exclude the tip of the corner of the component. In such a way, solely flat faces of the guiding elbow and the component touch each other, further increasing the accuracy of the mutual alignment.

According to an embodiment, each of the two recesses of the position detection area has an outer edge and an inner edge, which is arranged between the outer edge and a middle area between the two recesses. The two recesses may be point symmetric with respect to each other. When the edges are straight, the outer edge and the inner edge are inclined with respect to each other. Each recess may have the shape of a possibly rounded triangle, where the two edges define two sides of the triangle. Other forms of the recesses are possible, as long as a reference position detection, such as described below can be performed.

According to an embodiment, the outer edges are parallel and the inner edges are parallel. In such a way, it is possible to determine the position of the reference position with a single move of the pipette tip along the recesses.

According to an embodiment, the recesses and/or the edges are arranged for detecting a reference position between the recesses with capacity measurements of a pipette top moved above the recesses. This may be achieved by making at least the edges, the recesses or the whole guiding elbow from an electrically conducting material. The reference position may be a fixed point defined relative to the position detection area and in particular the edges.

Each recess of the position detection area may have a side wall and optionally may be bottomed. The recess also may protrude through the guiding elbow and/or wing. A edge may be the edge between a side wall and an upper surface of the guiding elbow. A recess may be an indentation in a planar upper face of the guiding elbow, which is bordered at least at two sides by the edges. The edges may be orthogonal to the upper face. However, also inclinations are possible.

The position detection area may be made of an electrically conducting material, such as metal or an electrically conducting plastics material. In such a way, a capacity is measurable between the tip of the pipette tip and the position detection area. The edges are straight, such that their positions and orientations are easily determinable with a low number of measurement points, where the capacity between the tip of the pipette tip and the position detection area changes.

The position of the guiding elbow and in particular the reference position on the guiding elbow may be determined capacitively, i.e., based on capacity measurements. In such a way, there is no need for touching the guiding elbow with the pipette. The pipette and in particular its pipette tip are lowered towards the position detection area, which position is roughly known. The pipette and the position detection area are electrically conducting and the laboratory is adapted for determining a capacity between the pipette tip and the position detection area. When a specific capacity is reached, the position of the position detection area in z-direction (orthogonal to the planar upper surface of the position detection area and/or the guiding elbow) is determined. The pipette tip is moved across the recesses, and from the decreasing and increasing capacity, the position of the edges on the path of the pipette tip is determined. From these intersection points it is possible to calculate the reference position, since the relative position and orientation of the edges are known. All these calculations and/or measurements may be automatically performed by the controller of the laboratory automation device.

According to an embodiment, the guiding elbow is formed one-piece and/or is made of an electric conducting material. The guiding elbow may be machined in one-piece and/or may be a rigid body. The capacity measurements at best are performed with an electric conducting material.

A further aspect of the invention relates to a guiding system for a laboratory automation device.

According to an embodiment, the guiding system comprises a guiding elbow such as described herein and a placement frame such as described herein. Optionally, the guiding system furthermore comprises the component.

According to an embodiment, the placement frame has a placement face for placing the lower face of the guiding elbow. The placement face may at least partially surround a component opening of the placement frame. The component or at least the corner of the component is arranged in the component opening.

According to an embodiment, the at least one alignment member comprises at least a first magnetic spot in the first wing and at least a second magnetic spot in the second wing of the guiding elbow and the placement frame comprises at least a third magnetic spot and a fourth magnetic spot arranged in the placement face, wherein each of the third magnetic spot and the fourth magnetic spot are made of a permanent magnet and/or from magnetic material, wherein the guiding elbow is detachably mountable to the placement frame such that the first spot and third spot attract each other and the second spot and fourth spot attract each other for generating a force in a direction towards the first notch and the second notch. The guiding elbow and in particular its notches may be moved by the magnetic spots towards and/or onto the corner of the component.

According to an embodiment, the at least one alignment member comprises a first elastic member arranged between the placement frame and the first wing and a second elastic member arranged between the placement frame and the second wing. The first elastic member and the second elastic member may be adapted for generating a force in a direction towards the first notch and the second notch.

The guiding elbow may be detachably mounted to the placement frame and/or the component. The guiding elbow solely may stick to the placement frame and/or component by magnetic and/or mechanical forces.

According to an embodiment, the guiding system further comprises the component of the laboratory automation device.

According to an embodiment, the component has a corner with a top face, a first stop face and a second stop face, which are orthogonal with respect to the top face and are angled with respect to each other. These faces are complementary to the notches of the guiding elbow.

According to an embodiment, the component is rigidly attached to the placement frame, such that the corner of the component protrudes through the component opening. The placement face of the placement frame may at least partially surround the top face of the component and/or may be lowered with respect to the top face.

According to an embodiment, the guiding elbow rests on the corner of the component and the first spot and third spot attract each other and the second spot and fourth spot attract each other, such that the guiding elbow is pressed against the corner. In particular, the first and second notch of the guiding elbow are pressed against the corner. The guiding face of each notch may be pressed against the top face of the corner of the component. The stop face of each notch may be pressed against the respective stop face of the corner.

According to an embodiment, a distance of the third spot to the first stop face of the component is shorter than a distance of the first spot to the stop face of the first notch. It also may be that a distance of the fourth spot to the second stop face of the component is shorter than a distance of the first spot to the stop face of the second notch. In such a way, a permanent force pressing the guiding elbow against the corner is achieved.

According to an embodiment, the port of the component has a diameter of less than 2 mm. With the positioning process of the pipette tip such as described herein, even such small ports may be hit.

According to an embodiment, the component is a microfluidic device, in particular with pumps and sensors, for processing a liquid. Such a microfluidic device may comprise a microfluidic chip and/or may have channels with a diameter smaller than 100 µm and/or therefore also small ports. Microfluidic devices may be designed for DNA analysis, spectrographic analysis, etc.

A further aspect of the invention relates to a laboratory automation device, comprising a workbench, a guiding elbow, a placement frame and a component, which form a guiding system as described herein and a pipetting arm with a pipette for moving the pipette, and a guiding elbow and a component, which form a guiding system

According to an embodiment, the workbench comprises a receptacle for receiving the component. The component with the port may be a removable component or may be a removable part of the component. The receptacle may be an opening in the workbench.

According to an embodiment, the laboratory automation device is adapted for detecting the edges of the recesses based on capacity measurements by moving a pipette tip of the pipette across the recesses, for determining the reference position from the detected edges and the position of the port from the reference position. The laboratory automation device further may comprise a controller for controlling the pipetting arm and for performing capacity measurements with the pipette tip and/or for performing these method steps.

According to an embodiment, the laboratory automation device further comprises a gripper device for automatically picking the guiding elbow and for placing the guiding elbow on the placement frame and/or the component or on a removable part of the component. The gripper device may comprise two paddle grippers, which have been fetched by two pipetting channels. The gripper device may be a dedicated robotic gripper arm with fixed or exchangeable gripper fingers. The controller also may be adapted for controlling the gripper device and for performing this method step.

A further aspect of the invention relates to a method for pipetting liquid with the laboratory automation device. The method may be performed automatically by the controller of the laboratory automation device.

According to an embodiment, the method comprises: moving the pipette tip in a line over the position detection area. This may be done automatically with the pipetting arm, which is controlled accordingly. The approximate position of the component and/or the guiding elbow may be known to the controller. Based on this approximate position, the pipette tip may be moved to a starting point above the position detection area, then lowered, until the surface of the position detection area is detected. In this height, the pipette tip then may be moved to an ending point, where the edges and in particular a crossing of the edges of the recesses are detected based on the changing capacitance.

According to an embodiment, the method comprises: determining a changing capacitance between the pipette tip and an electrically conducting material of the position detection area. During the movement, the capacitance changes, when the pipette tip passes an edge of a recess. This changing capacitance may be recorded by the controller.

According to an embodiment, the method comprises: determining positions of the edges of the recesses and lengths between the positions from the changing capacitance. The positions, where the capacitance changes, can be assumed to be the points, where the pipette tip passes and/or crosses the edges of the recesses.

According to an embodiment, the method comprises: determining a reference position of the guiding elbow from the lengths and a position of the port of the component. For each recess, a distance is determined between the points, where the pipette passes the edges of the recess. The reference position can be a symmetry point to which the two recesses are point symmetric. The position of the symmetry point can be determined from the difference and the ratio of the distances of the recesses. The position of the port of the component then can be determined from the reference position, since the relative position of the port to the reference position is known from the geometry of the guiding elbow. The corresponding difference vector may be stored in the controller.

According to an embodiment, the method comprises: moving the pipette tip to the position of the port and dispensing liquid into the port and/or aspirating liquid from the port. After the reference position has been determined, the pipette also may be moved to other ports and liquid may be aspirated and/or dispensed there.

According to an embodiment, the method comprises: placing the guiding elbow on the placement frame and/or the component. This may be done automatically, with the gripper device. The gripper device may be controlled by the controller accordingly.

According to an embodiment, the method further comprises: placing the guiding elbow manually on the component. The component-placement frame assembly may be placed to the workbench by a person. The person also may place the guiding elbow onto the component.

A further aspect of the invention relates to a computer program for controlling the laboratory automation device, which, when being executed by a processor, is adapted to carry out the steps of the method as described herein. The computer program may be performed by the controller.

A further aspect of the invention relates to a computer-readable medium, in which such a computer program is stored. A computer-readable medium may be a hard disk, an USB (Universal Serial Bus) storage device, a RAM (Random Access Memory), a ROM (Read Only Memory), an EPROM (Erasable Programmable Read Only Memory) or a FLASH memory. A computer-readable medium may also be a data communication network, e.g., the Internet, which allows downloading a program code. In general, the computer-readable medium may be a non-transitory or transitory medium.

It has to be understood that features of the method, the computer program and the computer-readable medium as described herein may be features of the laboratory automation device as described herein, and vice versa.

These and other aspects of the invention will be apparent from and elucidated with reference to the embodiments described hereinafter.

### BRIEF DESCRIPTION OF THE DRAWINGS

Below, embodiments of the present invention are described in more detail with reference to the attached drawings.
Fig. 1 schematically shows a laboratory automation device according to an embodiment of the invention.
Fig. 2 shows a perspective view of a guiding system according to an embodiment of the invention.
Fig. 3 shows a perspective view of a guiding system according to an embodiment of the invention.
Fig. 4 shows a perspective view of a guiding system according to an embodiment of the invention.
Fig. 5 shows a cross-sectional view of a guiding system according to an embodiment of the invention.
Fig. 6 shows a flow diagram for controlling a laboratory automation device according to an embodiment of the invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

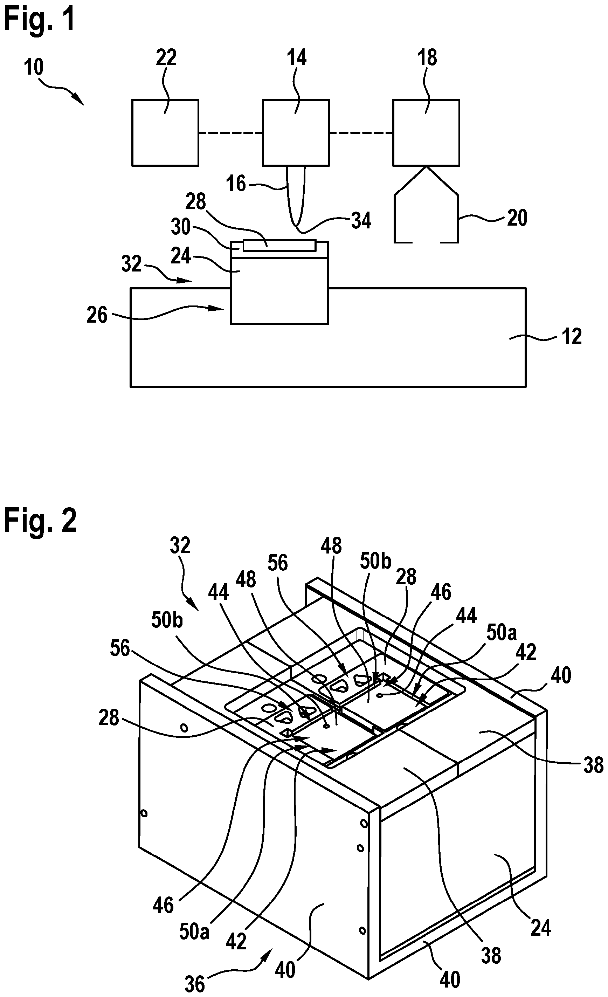

Fig. 1 shows a laboratory automation device 10, which comprises a workbench 12, a pipetting arm 14 with a pipette 16, a gripper device 18 with a gripper 20 and a controller 22 for controlling the pipetting arm 14 and the gripper device 18. The workbench 12 is adapted for carrying components, such as carriers for sample containers, test tubes, microplates, etc. and potentially devices like thermocyclers, shakers, microplate readers etc. Fig. 1 shows a special removable component 24, which is placeable into a receptacle 26 of the workbench 12. For example, this may be done manually or with the gripper device 18. The component 24 may be a microfluidic device for processing a liquid.

Fig. 1 also schematically shows a guiding elbow 28 inserted into a placement frame 30, which is connected to the component 24. The guiding elbow 28 is removable and may be placed on the placement frame 30 and the component 24, for example manually or with the gripper device 18. The guiding elbow 28 and placement frame 30 optionally together with the component 24 may be seen together as a guiding system 32.

The laboratory automation device 10 and in particular the controller 22 is also adapted for capacitively determining a distance of the pipette tip 34 of the pipette 16 to an electric conductive surface below. For achieving this, the pipette 16 may be made of an electrically conducting material.

Fig. 2 shows a guiding system 32 in more detail. The component 24 is integrated into a substantially cuboidal housing 36, which provides two placement frames 38 as upper wall. The placement frames 38 are rigidly connected via further walls 40 of the housing 36 to the component 24. It has to be understood that the walls 40 may be seen as parts of the component 24.

Each placement frame 38 has a component opening 42, through which the component 24 and in particularly one of its ports 44 can be accessed. As shown in Fig. 2, an upper part with a port 44 of the component 24 protrudes through each component opening 42. For example, the component 24 may be a microfluidic chip or a microfluid module, into which the microfluidic chip is inserted.

Each of the upper parts of the component 24 has a corner 46 with a top face 48, a first stop face 50a and a second stop face 50b, which are orthogonal with respect to the top face 48 and are angled with respect to each other. For example, the upper parts may be microfluidic chips, which are inserted into a microfluid module to form together the component 24.

A further part of the guiding system 32 are guiding elbows 28, each of which rests on a corner 46 of the component 24 and on the respective placement frame surrounding the corner 46.

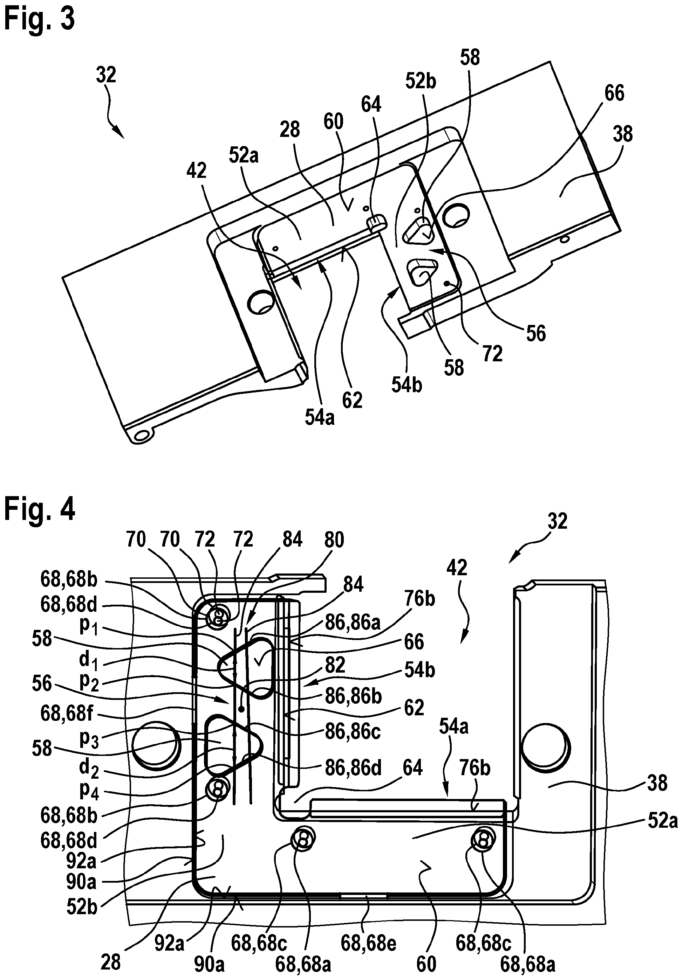

Figs. 3 and 4 show one guiding elbow 28 and one placement frame 38 of the guiding system of Fig. 2.

The guiding elbow 28 has a first wing 52a and a second wing 52b, which are angled with respect to each other, for example such as shown in an angle of 90°. Other angles are possible as long as the guiding elbow 28 is complementary formed with respect to the part of the component 24 onto which the guiding elbow 28 is placed.

The guiding elbow 28 comprises a first notch 54a, which is running along a lower inner side of the first wing 52a and a second notch 54b running along a lower inner side of the second wing 52b. The notches 54a, 54b are used for placing the guiding elbow 28 on the corner 46 of the component 24.

A position detection area 56 with two recesses 58 is arranged in the second wing 52b. The recesses 58 may be through holes from an upper face 60 to a lower face 62 of the guiding elbow.

The guiding elbow 28 further has a corner hole 64, which is arranged in an inner corner of the guiding elbow 28, the corner hole 64 running from the upper face 60 to the lower face 62 of the guiding elbow 28. Inner sides of the guiding elbow 28 facing towards the component opening end in the corner hole 64, such that the inner sides do not meet in a sharp edge. Also, the first notch 54a and the second notch 54b, which are arranged at the inner sides, lead into the corner hole 64.

The placement frame 38 has a planar placement face 66, on which the planar lower face 62 of the guiding elbow 28 is placed. The placement face 66 partially surrounds the component opening 42 and/or has the shape of an angle. The placement face 66 is on a lower level as the top face 48 of the component 24.

Fig. 4 shows alignment members 68 for aligning the guiding elbow 28 with respect to the component 24. The alignment members 68 are adapted, designed and/or arranged for generating a force between the placement frame 38 and the guiding elbow 28, which moves the guiding elbow 28 towards the component 24 and/or presses the guiding elbow 28 against the component 24. The alignment members 68 may comprise magnetic spots 68a, 68b, 68c, 68d and/or elastic members 68e, 68f.

The guiding elbow 28 has first magnetic spots 68a, which are arranged in the lower face 62 of the first wing 52a, and second magnetic spots 68b, which are arranged in the lower face 62 of the second wing 52b. The magnetic spots 68a, 68b are made of permanent magnets and/or from magnetic material. The magnetic spots 68a, 68b may be arranged in spot holes 70 in the lower face 62, where venting holes 72 with a smaller diameter run from the spot holes 70 to the upper face 60, such that the magnetic spots 68a, 68b can be pressed into the spot holes 70.

The placement frame 38 has third magnetic spots 68c and fourth magnetic spots 68d arranged in the placement face 66. Also, the third magnetic spots 68c and the fourth magnetic spots 68d are made of permanent magnets and/or from magnetic material. Either the first and second magnetic spots 68a, 68b or the third and fourth magnetic spots 68c, 68d or both are permanent magnets. The magnetic spots 68c, 68d may be arranged in spot holes 70 in the placement face 66, where venting holes 72 with a smaller diameter run from the spot holes 70 to an opposite face 60 of the placement frame 38, such that the magnetic spots 68c, 68d can be pressed into the spot holes 70.

The guiding elbow 28 is detachably mountable to the placement frame 38, such that the first spots 68a and the third spots 68c attract each other and the second spots 68b and the fourth spots 68d attract each other. When attracted by the magnetic spots 68a, 68b, 68c, 68d, the guiding elbow 28 rests on the corner 46 of the component 24 and the first spots 68a and third spots 68c attract each other and the second spots 68b and fourth spots 68d attract each other, such that the guiding elbow 28 is pressed against the corner 46.

Alternatively or additionally to the magnetic spots 68a, 68b, 68c, 68d, the guiding elbow 28 has a first elastic member 68e and a second elastic member 68f. The elastic members 68e, 68f are arranged between the guiding elbow 28 and the placement frame 38. The guiding elbow 28 is detachably mountable to the placement frame 38, such that the first elastic member 68e and the elastic member 68e push the guiding elbow 28 away from the placement frame 38, such that the guiding elbow 28 is pressed against the corner 46 of the component. The first elastic member 68e may be arranged between the first wing 52a and the placement frame 38. The second elastic member 68f may be arranged between the second wing 52b and the placement frame 38.

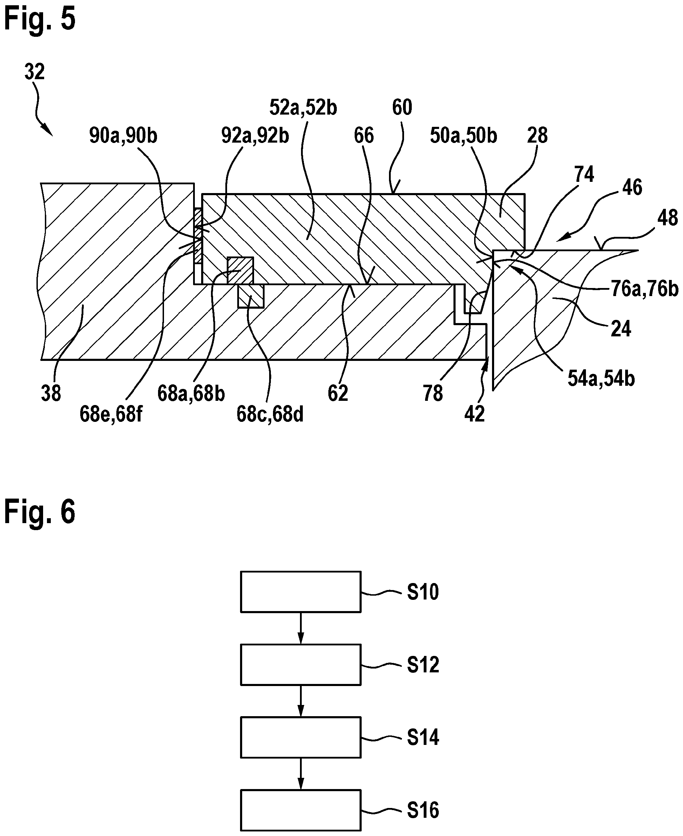

Fig. 5 shows a cross-sectional view through the guiding system 32, through the first wing 52a or the second wing 52b. The guiding elbow 28 is attracted by the magnetic spots 68a, 68b, 68c, 68d to the placement frame 38 and rests with its notches 54a, 54b on the corner 46 of the component 24. Alternatively or additionally, the guiding elbow 28 is pushed by the elastic member 68e, 68f against the corner 46.

Each of the first notch 54a and the second notch 54b has a guiding face 74 in parallel to the lower face 62 and a first stop face 76a and second stop face 76b, respectively, angled with respect to the guiding face 74. The first stop face 76a and the second stop face 76b of the notches 54a, 54b are angled with respect to each other with the same angle as the notches and/or the first and second stop faces 50a, 50b of the component, such as 90°. The guiding face 74 rests on the top face 48, the first stop faces 76a, 50a rest on each other and the second stop faces 76b, 50b rest on each other.

As can be seen in Fig. 4, a distance of the third spot 68c to the first stop face 50a of the component 24 is shorter than a distance of the first spot 68a to the stop face 76a of the first notch 54a. It also may be that a distance of the fourth spot 68d to the second stop face 50b of the component 24 is shorter than a distance of the first spot 68a to the stop face 76b of the second notch 54b. There are several arrangements of magnetic spots 68a, 68b, 68c, 68d, which result in a net force pressing the stop faces 50a, 50b and the stop faces 76a, 76b against each other.

Fig. 5 further shows that at least a part 78 of the stop face 76a, 76b is slanted. An upper part of the stop face 76a, 76b may be in parallel to the stop face 50a, 50b and/or orthogonal to the guiding face 74. Also, the stop face 76a, 76b may protrude beyond the lower face 62.

The elastic member 68e, 68f is arranged between a pushing face 90a, 90b of the guiding elbow 28 and a pushing face 92a, 92b of the placement frame 38. The elastic member 68e (or 68f) may be permanently attached to the pushing face 90a (or 90b) or the pushing face 92a (or 92b). The elastic member 68e (or 68f) pushes the pushing faces 90a, 92a (or 90b, 92b) away from each other. The pushing face 90a (or 90b) may be arranged in parallel to the stop face 76a (or 76b). The pushing face 92a (or 92b) may be arranged in parallel to the pushing face 90a (or 90b).

Fig. 6 shows a flow diagram for controlling the laboratory automation device 10, in particular for determining the position of a port 44 of a component 24 of the laboratory automation device 10 and for pipetting liquid with the laboratory automation device 10. The method may be automatically performed by the controller 22.

In an optional step S10, the guiding elbow 28 is placed on the placement frame 30 and on the component 24. When the component 24 is composed of several parts, which are put together, such as a microfluid chip and a microfluid module, firstly, these parts may be put together. All this may be done manually or automatically with the gripper device 18, which for example may have grippers 20. After the placing, the guiding elbow 28 self-aligns with respect to the component 24 due to the magnet spots 68a, 68b, 68c, 68d. In particular, the notches 54a, 54b may be pressed against the corner 46.

In step S12, the pipette tip 34 is moved into a starting area 80 within the position detection area 56, such as shown in Fig. 4. There, the pipetting tip 34 is lowered downwards to the upper surface of the position detection area 56 until a desired distance in z-direction is reached. This distance may be determined by capacitance measurements via the pipette tip 34. The controller 22 detects the upper surface 60 touchless by monitoring the capacitance. Alternatively, the pipette tip 34 is lowered to a predetermined position close enough to the surface for sensing capacitance.

After that, the pipette tip 34 is moved in a line and/or path 84 over the position detection area 56, such that it passes the two recesses 58, to determine a reference position 82 on the guiding elbow 28 with capacitance measurements performed by the controller 22.

Fig. 4 shows two example paths 84 that may be followed by the pipette tip 34 during this movement. The paths 84 run above the recesses 58, which have a substantially triangular or trapezoid shape with edges 86. During the movement, a changing capacitance at the edges 86 between the pipette tip 34 and an electrically conducting material of the position detection area 56 is measured. The controller 22 controls the pipetting arm 14 with a pipette 16 performing a capacitive scan close to the upper surface across the recesses 58. The height in z-direction of the pipette tip 34 needs not to change.

After that, positions p₁, p₂, p₃, p₄ of the edges 86 of the recesses 58 are determined from the measured capacitances along the path 84. This may be done by detecting steep changes in the capacitance signal.

From the positions p₁, p₂, p₃, p₄, lengths d₁, d₂ are determined, which are distances between these positions.

In particular, each recess 58 has an outer edge 86a, 86d and an inner edge 86b, 86c, which is arranged between the outer edge 86a, 86d and a middle area between the two recesses 58. The outer edges 86a, 86d are parallel and the inner edges 86b, 86c are parallel. Due to these geometric properties, the reference position 82, for example in the middle area, can be determined from a difference of the lengths d₁, d₂ and their ratio. However, also other arrangements of edges 86 are possible. In these cases, it may be necessary to determine more than two lengths to determine the reference position 82.

In step S14, the position of the respective port 44 of the component 24 is determined from the reference position 82. An offset from the reference position 82 to the position of the port 44 may be stored in the controller 22 with respect to the x-, y- and z-direction.

In step S16, the pipette tip 34 is moved to the position of the port 44 and liquid is dispensed into the port 44. Since the reference position 82 was determined with the same pipette 16 and since the guiding elbow 28 self-aligned with the component 24, the tip error and the variation of the component 24 with respect to the workbench 12 are compensated and also a small port 44 is hit with high reliability.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

| | |
|---|---|
| 10 | laboratory automation device |
| 12 | workbench |
| 14 | pipetting arm |
| 16 | pipette |
| 18 | gripper device |
| 20 | gripper |
| 22 | controller |
| 24 | component |
| 26 | receptacle |
| 28 | guiding elbow |
| 30 | placement frame |
| 32 | guiding system |
| 34 | pipette tip |
| 36 | housing |
| 38 | placement frame |
| 40 | wall |
| 42 | component opening |
| 44 | port |
| 46 | corner |
| 48 | top face |
| 50a | first stop face |
| 50b | second stop face |
| 52a | first wing |
| 52b | second wing |
| 54a | first notch |
| 54b | second notch |
| 56 | position detection area |
| 58 | recess |
| 60 | upper face |
| 62 | lower face |
| 64 | corner hole |
| 66 | placement face |
| 68 | alignment member |
| 68a | first magnetic spot |
| 68b | second magnetic spot |
| 68c | third magnetic spot |
| 68d | fourth magnetic spot |
| 68e | first elastic member |
| 68f | second elastic member |
| 70 | spot hole |
| 72 | venting hole |
| 74 | guiding face |
| 76a | first stop face |
| 76b | second stop face |
| 78 | slanted part of the stop face |
| 80 | starting area |
| 82 | reference position |
| 84 | path |
| 86, 86a | edge |
| 86, 86b | edge |
| 86, 86c | edge |
| 86, 86d | edge |
| p₁, p₂, p₃, p₄ | position |
| d₁, d₂ | length |
| 90a | first pushing face of guiding elbow |
| 90b | second pushing face of guiding elbow |
| 92a | first pushing face of placement frame |
| 92b | second pushing face of placement frame |

## Claims

1. A guiding elbow (28) for a laboratory automation device (10), the guiding elbow (28) comprising:
a first wing (52a) and a second wing (52b), which are angled with respect to each other;
a first notch (54a), which is running along a lower inner side of the first wing (52a), and a second notch (54b) running along a lower inner side of the second wing (52b), for placing the guiding elbow (28) on a corner (46) of a component (24) of the laboratory automation device (10);
a position detection area (56) arranged on an upper face (60) of the guiding elbow (28), wherein the position detection area (56) has two recesses (58), each recess (58) having two edges (86) with varying distance;
at least one alignment member (68) for generating a force in a direction towards the first notch (54a) and the second notch (54b).

2. The guiding elbow (28) of claim 1,
wherein the at least one alignment member (68) comprise at least a first magnetic spot (68a) arranged in a lower face (62) of the first wing (52a) and at least a second magnetic spot (68b) arranged in a lower face (62) of the second wing (52b), wherein each of the first magnetic spot (68a) and second magnetic spot (68b) are made of a permanent magnet and/or from magnetic material.

3. The guiding elbow (28) of claim 1 or 2,
wherein the at least one alignment member (68) comprises a first elastic member (68e) arranged opposite to the first notch (54a) and a second elastic member (68f) arranged opposite to the second notch (54b).

4. The guiding elbow (28) of one of the previous claims,
wherein each of the first notch (54a) and the second notch (54b) have a guiding face (74) in parallel to the lower face (62) and a stop face (76a, 76b) angled with respect to the guiding face (74); and/or
wherein at least a part of the stop face (76a, 76b) is slanted; and/or
wherein the stop face (76a, 76b) protrudes beyond the lower face (62).

5. The guiding elbow (28) of one of the previous claims,
wherein each of the two recesses (58) of the position detection area (56) has an outer edge (86a, 86d) and an inner edge (86b, 86c), which is arranged between the outer edge (86a, 86d) and a middle area between the two recesses (58);
wherein the outer edges (86a, 86d) are parallel and the inner edges are parallel (86b, 86c).

6. A guiding system (32) for a laboratory automation device (10), the guiding system (32) comprising:
a guiding elbow (28) according to one of the previous claims,
a placement frame (38) with a placement face (66) for placing the lower face (62) of the guiding elbow (28), the placement face (66) at least partially surrounding a component opening (42);
wherein the guiding elbow (28) is detachably mountable to the placement frame (38).

7. The guiding system (32) of claim 6,
wherein the at least one alignment member (68) comprises at least a first magnetic spot (68a) in the first wing (52a) and at least a second magnetic spot (68b) in the second wing (52a);
wherein the placement frame (38) comprises at least a third magnetic spot (68c) and a fourth magnetic spot (68d) arranged in the placement face (66), wherein each of the third magnetic spot (68c) and the fourth magnetic spot (68d) are made of a permanent magnet and/or from magnetic material;
wherein the first spot (68a) and third spot (68c) attract each other and the second spot (68b) and fourth spot (68d) attract each other for generating a force in a direction towards the first notch (54a) and the second notch (54b).

8. The guiding system (32) of claim 6 or 7,
wherein the at least one alignment member (68) comprises a first elastic member (68e) arranged between the placement frame (38) and the first wing (52a) and a second elastic member (68f) arranged between the placement frame (38) and the second wing (52b);
wherein the a first elastic member (68e) and the scone elastic member (68e) are adapted for generating a force in a direction towards the first notch (54a) and the second notch (54b).

9. The guiding system (32) of one of claims 6 to 8, further comprising:
a component (24) of the laboratory automation device (10);
wherein the component (24) has a corner (46) with a top face (48), a first stop face (50a) and a second stop face (50b), which are orthogonal with respect to the top face and are angled with respect to each other;
wherein the component (24) is rigidly attached to the placement frame (38), such that the corner (46) of the component (24) protrudes through the component opening (42).

10. A laboratory automation device (10), comprising:
a workbench (12);
a guiding elbow (28), a placement frame (38) and a component (24), which form a guiding system (32) according to one of claims 6 to 9;
a pipetting arm (14) with a pipette (16) for moving the pipette (16);
wherein the workbench (12) comprises a receptacle (26) for receiving the component (24).

11. The laboratory automation device (10) of claim 10, further comprising:
a gripper device (18) for automatically picking the guiding elbow (28) and for placing the guiding elbow (28) on the placement frame (38).

12. A method for pipetting liquid with the laboratory automation device (10) of one of claims 10 or 11, the method comprising:
moving the pipette tip (34) in a line over the position detection area (56) and determining a changing capacitance between the pipette tip (34) and an electrically conducting material of the position detection area (56);
determining positions (p₁, p₂, p₃, p₄) of the edges (86) of the recesses (58) and lengths (d₁, d₂) between the positions from the changing capacitance;
determining a reference position (82) of the guiding elbow (28) from the lengths, and a position of a port (44) of the component (24) from the reference position (82);
moving the pipette tip (34) to the position of the port (44) and dispensing liquid into the port (44) and/or aspirating liquid from the port (44).

13. The method of claim 12, further comprising:
placing the guiding elbow (28) on the placement frame with a gripper device (18) of the laboratory automation device (10).

14. A computer program for controlling the laboratory automation device (10) of one of claims 10 or 11, which, when being executed by a processor, is adapted to carry out the steps of the method of claim 12 or 13.

15. A computer-readable medium, in which a computer program according to claim 14 is stored.
